(19) **Europäisches Patentamt / European Patent Office / Office européen des brevets**

(11) **EP 1 807 967 B1**

(12) **FASCICULE DE BREVET EUROPEEN**

(45) Date de publication et mention
de la délivrance du brevet:
**04.09.2019 Bulletin 2019/36**

(21) Numéro de dépôt: **05811834.0**

(22) Date de dépôt: **21.10.2005**

(51) Int Cl.:
***H04L 9/30*** (2006.01)

(86) Numéro de dépôt international:
**PCT/FR2005/002633**

(87) Numéro de publication internationale:
**WO 2006/048524 (11.05.2006 Gazette 2006/19)**

(54) **PROCEDE DE DELEGATION SECURISEE DE CALCUL D'UNE APPLICATION BILINEAIRE**

VERFAHREN ZUR ABGESICHERTEN DELEGATION EINER BILINEARFUNKTIONSBERECHNUNG

METHOD FOR SECURE DELEGATION OF CALCULATION OF A BILINEAR APPLICATION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **04.11.2004 FR 0411777**

(43) Date de publication de la demande:
**18.07.2007 Bulletin 2007/29**

(73) Titulaire: **Orange**
**75015 Paris (FR)**

(72) Inventeurs:
• **LEFRANC, David**
  **95240 CORMEILLES EN PARISIS (FR)**
• **GIRAULT, Marc**
  **F-14000 Caen (FR)**

(56) Documents cités:
**EP-A- 0 381 523**  **US-A- 5 369 708**
**US-A1- 2003 161 472**  **US-A1- 2003 182 554**
**US-B1- 6 779 111**

• **RATNA DUTTA ET AL: "Pairing-Based Cryptographic Protocols : A Survey", INTERNATIONAL ASSOCIATION FOR CRYPTOLOGIC RESEARCH,, vol. 20040624:121914, 24 June 2004 (2004-06-24), pages 1-45, XP061001192, [retrieved on 2004-06-24]**

**Description**

La présente invention concerne un procédé de délégation sécurisée de calcul d'une valeur f(X,Y) d'une application bilinéaire auprès d'un serveur de calcul. Elle concerne également un procédé de vérification sécurisée d'une égalité d'une valeur f(X,Y) d'une application bilinéaire à une valeur donnée et un procédé de vérification sécurisée d'une égalité entre deux valeurs f(X,Y) et f(Z,T) d'une application bilinéaire.

D'une manière très générale, l'invention se rapporte au domaine de la cryptographie et, plus précisément, aux procédés cryptographiques de protection contre la fraude d'un support tel qu'une puce électronique dans des transactions entre une puce et une application bancaire, ou d'une puce électronique d'une carte SIM d'un téléphone portable.

L'invention trouve une application particulièrement avantageuse dans l'utilisation de nouveaux procédés cryptographiques jugés à l'heure actuelle trop coûteux en temps de calcul, tels que les procédés impliquant des fonctions bilinéaires.

Actuellement, les cartes à puce sont susceptibles de subir différents types de fraude.

Un premier type de fraude consiste à dupliquer la carte sans autorisation, le terme de « clonage » étant souvent utilisé pour caractériser cette opération.

Un deuxième type de fraude consiste à modifier les données attachées à une carte, en particulier le montant du crédit inscrit dans la mémoire de la carte.

Pour lutter contre ces fraudes, il est fait appel à la cryptographie, d'une part, pour assurer l'authentification de la carte au moyen d'un algorithme d'authentification et/ou l'authentification des données au moyen d'une signature numérique, et, d'autre part, pour assurer le cas échéant la confidentialité des données au moyen d'un chiffrement.

La cryptographie met en jeu deux entités qui sont, dans le cas de l'authentification, une entité vérificatrice et un objet à authentifier. Elle peut être soit symétrique, soit asymétrique.

Dans le cas de la cryptographie symétrique, appelée aussi à clé secrète, les deux entités partagent exactement la même information, en particulier ladite clé secrète.

Lorsqu'il s'agit d'une cryptographie asymétrique, ou à clé publique, une des entités, l'entité à authentifier, possède une paire de clés dont l'une est privée et l'autre est publique ; il n'y a donc pas de clé secrète partagée.

Les premiers mécanismes d'authentification développés en cryptographie symétrique consistent à calculer une fois pour toutes une valeur d'authentification, différente pour chaque carte, à la stocker dans la mémoire de la carte, à la lire à chaque transaction et à la vérifier en interrogeant une application du réseau supportant la transaction où les valeurs d'authentification déjà attribuées sont soit stockées, soit recalculées. Cependant, ces mécanismes assurent une protection insuffisante parce que la valeur d'authentification peut être espionnée, reproduite et rejouée frauduleusement dans la mesure où elle est toujours la même pour une carte donnée, permettant ainsi de réaliser un clone de la carte. Pour lutter contre les clones, les mécanismes d'authentification passifs de cartes sont remplacés par des mécanismes d'authentification actifs qui peuvent en outre assurer l'intégrité des données.

Le principe général des mécanismes d'authentification actifs symétriques est le suivant : lors d'une authentification, la puce électronique et l'application calculent une valeur d'authentification qui est le résultat d'une fonction appliquée à une liste d'arguments déterminée à chaque authentification. Cette liste d'arguments peut comprendre un aléa défini par l'application à chaque authentification, une donnée contenue dans la puce électronique, et une clé secrète connue de la puce électronique et de l'application. Lorsque la valeur d'authentification calculée par la puce électronique est identique à la valeur d'authentification calculée par l'application, la puce électronique est jugée authentique et la transaction entre la puce et l'application est autorisée.

Cependant, les mécanismes à clé secrète imposent que les dispositifs de vérification en charge de l'authentification de la puce, tels que ceux présents dans un réseau de téléphonie publique, un terminal de paiement électronique ou encore un portillon de transport en commun, connaissent la clé secrète détenue par ladite puce. Il en découle un inconvénient majeur, à savoir que, si l'on souhaite que ledit dispositif puisse authentifier n'importe quelle puce émise en relation avec l'application, il doit, soit stocker les clés secrètes de toutes les puces, soit stocker une clé de base, appelée aussi clé-mère ou clé-maître, permettant de retrouver la clé secrète de n'importe quelle puce. Dans les deux cas, chacun de ces dispositifs stocke suffisamment d'informations pour pouvoir retrouver les clés secrètes de toutes les puces émises, et stocke donc suffisamment d'informations pour pouvoir fabriquer des clones d'une quelconque d'entre elles. Il s'ensuit qu'une intrusion réussie contre n'importe lequel des dispositifs de vérification anéantirait la sécurité de l'application dans son ensemble.

Ainsi, des solutions à base de cryptographie à clé publique peuvent être préférées aux mécanismes à clé secrète. Le principe de fonctionnement des mécanismes d'authentification à clés publiques est alors le suivant : la puce cherchant à s'authentifier calcule des valeurs dépendant de sa clé privée, associée à sa clé publique, et d'éventuels paramètres aléatoires. L'application vérifie ensuite la cohérence des valeurs calculées par la puce sans nécessiter la connaissance de la clé privée de la puce. Seule l'utilisation de la clé publique de la puce est nécessaire, ainsi que d'autres paramètres non secrets.

Les solutions les plus connues permettant de réaliser de tels mécanismes sont généralement basées sur des problèmes mathématiques difficiles à résoudre, tels que la factorisation ou le logarithme discret. Par ailleurs, ces problèmes engendrent dans leur réalisation des calculs d'exponentiations modulaires, c'est à dire des calculs du type $x^e$ *mod n* où mod correspond à la fonction mathématique de réduction modulaire. Ce type de calculs est a priori l'opération la plus complexe pouvant être réalisée en un temps raisonnable, sans hypothèse de puissance de calcul.

Depuis quelques années, les applications bilinéaires, bien connues des mathématiciens, ont fait leur apparition dans le domaine de la cryptographie.

Considérons par exemple une application f définie sur l'ensemble $G_1 \times G_2$ dans G, où $G_1$, $G_2$ et G sont des groupes cycliques. $g_1$ et $g_2$ étant des générateurs respectivement de $G_1$ et $G_2$, l'application f est dite bilinéaire de $G_1 \times G_2$ dans G si :

$$f(g_1{}^a, g_2{}^b) = [f(g_1, g_2)]^{ab}$$

Ainsi, la demande US-2003/182554 concerne un procédé pour déterminer un secret partagé entre deux entités *A* et *B* dans un système cryptographique. Ce procédé repose sur le partage de la quantité secrète $ê(P_A, S_B) = ê(S_A, P_B)$, où $P_A$ et $S_A$ sont respectivement les clés publique et secrète de l'entité *A*, $P_B$ et $S_B$ sont respectivement les clés publique et secrète de l'entité *B*, et *ê* est une application bilinéaire. Dans la description de cette demande, il est recommandé que cette application bilinéaire soit facilement calculable par un ordinateur.

Toutefois, le problème actuel lié aux applications bilinéaires réside dans le fait que leur évaluation engendre des calculs très importants en volume et bien plus complexes que ceux intervenant dans le calcul d'une exponentiation modulaire par exemple. D'où l'impossibilité de réaliser aujourd'hui de tels calculs dans le cadre des applications envisagées.

Le brevet US-6,779,111 concerne un procédé de délégation de calcul par une entité souhaitant crypter un message par RSA, dans lequel l'entité délègue à un serveur tiers, qui peut ne pas être de confiance, des calculs complexes pour réaliser le cryptage, tout en lui masquant le message à crypter.

Document XP061001192 publié par l'IACR avec le titre "Pairing-Based Cryptographie Protocols" de R. Dutta Décrit une étude qui couvre les différents protocoles cryptographiques basés sur les couplages. Aussi, le problème technique à résoudre par l'objet de la présente invention est de proposer des moyens qui permettraient une intégration efficace de procédés cryptographiques basés sur l'utilisation de fonctions bilinéaires, malgré la difficulté liée à leur complexité de calcul et tout en assurant un degré de sécurité maximum compatible avec les utilisations qui en sont faites.

La solution au problème technique posé est définie par l'objet des revendications indépendantes.

Ainsi, l'invention prévoit qu'une entité participant à un procédé cryptographique d'authentification par exemple, impliquant le calcul d'une fonction bilinéaire f(X,Y), communique avec un serveur de calcul possédant l'unique propriété d'être doté d'une forte puissance de calcul, sans qu'il soit nécessaire de supposer aucune autre propriété concernant ce serveur, notamment son niveau de sécurisation. En effet, au-delà de l'avantage de permettre l'utilisation des fonctions bilinéaires en cryptographie, le procédé conforme à l'invention permet également de sécuriser les données échangées et de renforcer la confiance dans les résultats obtenus, ceci par la mise en oeuvre de paramètres secrets connus de la seule entité cliente du serveur de calcul.

Il est important de signaler que, d'une manière générale, ladite entité ayant recours au serveur de calcul peut être indifféremment l'entité à authentifier ou l'entité vérificatrice.

L'invention a donc pour effet de déléguer au serveur la majorité des calculs impliquant des fonctions bilinéaires, et d'assurer la sécurité des résultats retournés par ledit serveur dans le sens où si un individu malveillant cherche à usurper l'identité d'une personne en utilisant sa clé publique, sans connaissance de la clé privée associée, et en ayant un contrôle total sur le serveur de calcul, les chances de succès d'un tel individu resteraient très faibles.

Le procédé de délégation selon l'invention s'applique avantageusement à deux situations particulières.

Une première situation concerne un procédé de vérification d'une égalité d'une valeur f(X,Y) d'une application bilinéaire à une valeur donnée *u* par délégation sécurisée auprès d'un serveur de calcul, remarquable, selon l'invention, en ce que ledit procédé comprend les étapes consistant à :

- choisir deux paramètres secrets a et b,
- calculer les nombres $X^a$ et $Y^b$,
- fournir au serveur de calcul les deux nombres $X^a$ et $Y^b$,
- effectuer par ledit serveur le calcul de $f(X^a, Y^b)$,
- recevoir du serveur de calcul la valeur de $f(X^a, Y^b)$,
- comparer la valeur de $f(X^a, Y^b)^p$ au nombre $u^q$, les nombres p et q vérifiant l'égalité abp=q.

On peut illustrer ce procédé de vérification d'une égalité d'une valeur d'une application bilinéaire à une valeur donnée par le mécanisme de signature suivant.

Le signataire d'un message m dispose d'une clé publique définie par exemple par trois nombres : $g_1 \in G_1$, $g_2 \in G_2$ et $v=g_2^x$, x étant la clé privée du signataire. L'entité vérificatrice destinataire du message connaît les trois nombres composant la clé publique et ignore la clé privée.

Le signataire du message tire au hasard un nombre r et calcule le nombre $\sigma$ donné par :

$$\sigma = g_1 \exp(m+rx)^{-1}$$

Le signataire envoie alors au destinataire du message le couple de nombres $\{\sigma,r\}$.

Afin de s'assurer de l'authenticité du message, à savoir l'intégrité de son contenu et l'identité de son expéditeur, le destinataire vérifie l'égalité suivante :

$$f(\sigma,g_2^m v^r) = f(g_1,g_2)$$

f étant une fonction bilinéaire.

Cette égalité résulte en effet de l'utilisation de la définition des arguments du membre de gauche et de la propriété des fonctions bilinéaires rappelée plus haut.

Les arguments du membre de droite étant connus à l'avance du destinataire, celui-ci peut faire effectuer le calcul correspondant de la fonction bilinéaire une fois pour toutes par le serveur de calcul. $f(g_1,g_2)$ est donc égal à un nombre donné connu u.

Le mécanisme de vérification implique donc le calcul par le serveur de la quantité $f(\sigma,g_2^m v^r)$. Pour cela, l'entité vérificatrice, ici, le destinataire du message, choisit deux nombres a et b, calcule $\sigma^a$ et $g_2^{bm} v^{br}$ et les transmet au serveur qui retourne la valeur $f(\sigma^a,g_2^{bm} v^{br})$ qui par définition vaut $f(\sigma,g_2^m v^r)^{ab}$. L'entité vérificatrice n'a donc plus qu'à vérifier que le nombre qui lui est retourné par le serveur de calcul est bien égal à $u^{ab}$, ou toute autre forme équivalente consistant à comparer $[f(\sigma^a,g_2^{bm} v^{br})]^p$ à $u^q$ avec abp=q.

On constate que dans ce cas trois valeurs doivent être calculées par l'entité vérificatrice, telles que: $\sigma^a$, $g_2^{bm} v^{br}$ et $u^{ab}$.

Selon l'équation de vérification considérée, l'un des paramètres a ou b pourra être choisi égal à 1, de sorte à réduire le nombre de calculs à effectuer.

Une deuxième situation d'application du procédé de délégation de calcul conforme à l'invention concerne un procédé de vérification d'une égalité entre deux valeurs f(X,Y) et f(Z,T) d'une application bilinéaire par délégation sécurisée auprès d'un serveur de calcul, remarquable, selon l'invention, en ce que ledit procédé comprend les étapes consistant à :

- choisir quatre paramètres secrets a, b, c et d,
- calculer les nombres $X^a$, $Y^b$, $Z^c$ et $T^d$,
- fournir au serveur de calcul les quatre nombres $X^a$, $Y^b$, $Z^c$ et $T^d$,
- effectuer par ledit serveur le calcul de $f(X^a,Y^b)$ et de $f(Z^c,T^d)$,
- recevoir du serveur de calcul les valeurs de $f(X^a,Y^b)$ et $f(Z^c,T^d)$,
- comparer les valeurs de $[f(X^a,Y^b)]^p$ et $[f(Z^c,T^d)]^q$, les nombres p et q vérifiant l'égalité abp=cdq.

Le mécanisme de signature suivant donne un exemple d'illustration de ce procédé de vérification sécurisée d'une égalité entre deux valeurs d'une application bilinéaire.

Dans cet exemple, on supposera pour simplifier l'écriture que tous les arguments des fonctions bilinéaires considérés appartiennent au même groupe cyclique G.

La clé publique du signataire du message m comprend un nombre $g \in G$ et un nombre $v=g^x$ qui appartient également au groupe G, x étant la clé privée du signataire.

Le signataire dispose d'une fonction de hachage h qui, au message m associe un élément du groupe G, noté h(m), cette fonction de hachage étant partagée avec le destinataire chargé d'effectuer l'authentification du message m.

Le signataire envoie alors au destinataire le message m ainsi que la signature $\sigma=h(m)^x$. Le destinataire pour authentifier le message vérifie l'égalité :

$$f(\sigma,g) = f(h(m),v)$$

Comme précédemment, cette égalité résulte de la définition des arguments et de la propriété des fonctions bilinéaires.

Le calcul de chaque membre de l'égalité précédente est délégué par l'entité vérificatrice auprès du serveur de calcul de la façon suivante.

S'agissant du membre de gauche, l'entité vérificatrice choisit deux paramètres secrets a et b, calcule $\sigma^a$ et $g^b$ et les envoie au serveur qui retourne $f(\sigma^a,g^b)=[f(\sigma,g)]^{ab}$.

De même, pour le membre de droite, l'entité vérificatrice choisit deux autres paramètres c et d, calcule $h(m)^c$ et $v^d$ et envoie ces valeurs au serveur qui retourne $f(h(m)^c,v^d)=[f(h(m),v)]^{cd}$.

L'entité vérificatrice doit alors vérifier que :

$$[f(\sigma^a,g^b)]^{cd} = [f(h(m)^c,v^d)]^{ab}$$

ou, plus généralement, la relation

$$[f(\sigma^a,g^b)]^p = [f(h(m)^c,v^d)]^q \qquad \text{avec } abp=cdq$$

Dans ce cas, l'entité vérificatrice doit calculer six valeurs, à savoir $\sigma^a$, $g^b$, $h(m)^c$ et $v^d$, ainsi que $[f(\sigma^a,g^b)]^{cd}$ et $[f(h(m)^c,v^d)]^{ab}$.

Là aussi, certains paramètres secrets parmi a, b, c et d pourront être choisis égaux à 1.

L'invention concerne également un support mémorisant un programme d'ordinateur pour la mise en oeuvre du procédé selon l'invention.

De même, l'invention s'applique avantageusement à la protection contre la fraude dudit support, et plus spécialement à la sécurisation des transactions entre une puce électronique et une application bancaire, ainsi qu'à la sécurisation de la puce électronique d'une carte SIM d'un téléphone portable. Dans ce dernier cas, on peut prévoir que ledit support est intégré au téléphone portable.

## Revendications

1. Procédé de délégation de calcul sécurisée par une entité participant à un mécanisme impliquant le calcul par ladite entité d'une valeur f(X,Y) d'une application bilinéaire, **caractérisé en ce que** ledit procédé comprend les étapes consistant à :

   pour ladite entité,

   - choisir deux paramètres secrets a et b,
   - calculer les nombres $X^a$ et $Y^b$,
   - fournir à un serveur de calcul les deux nombres $X^a$ et $Y^b$,

   pour ledit serveur de calcul,

   - effectuer le calcul de $f(X^a,Y^b)$,
   - fournir à ladite entité la valeur de $f(X^a,Y^b)$,

   et, pour ladite entité,

   - extraire la racine $ab^{ième}$ de $f(X^a,Y^b)$ de manière à obtenir la valeur f(X, Y), ledit procédé comprenant une vérification par une entité participant à un mécanisme impliquant la vérification par ladite entité de l'égalité d'une valeur f(X,Y) d'une application bilinéaire à une valeur donnée u, **caractérisé en ce qu'**il consiste à :

     - comparer la valeur de $f(X^a,Y^b)^p$ au nombre $u^q$, les nombres p et q vérifiant l'égalité abp=q.

2. Procédé de vérification selon la revendication 1, dans lequel la valeur donnée est une valeur f(Z, T) d'une application bilinéaire, le procédé comprenant en outre les étapes consistant à :

pour ladite entité,

- choisir également deux paramètres secrets c et d,
- calculer les nombres $Z^c$ et $T^d$,
- fournir au serveur de calcul les deux nombres $Z^c$ et $T^d$,

pour ledit serveur de calcul,

- effectuer le calcul de de $f(Z^c, T^d)$,
- fournir à ladite entité la valeur de $f(Z^c, T^d)$,

et, pour ladite entité,

- comparer les valeurs de $[f(X^a, Y^b)]^p$ et $[f(Z^c, T^d)]^q$, les nombres p et q vérifiant l'égalité abp=cdq.

**3.** Procédé selon l'une quelconque des revendications 1 à 3, **caractérisé en ce qu'**au plus un des paramètres secrets est égal à 1.

**4.** Système comprenant une entité participant à un mécanisme impliquant le calcul par ladite entité d'une valeur f(X, Y) d'une application bilinéaire, **caractérisée en ce qu'**elle est programmée pour mettre en oeuvre les étapes de procédé suivantes :

- choisir deux paramètres secrets a et b,
- calculer les nombres $X^a$ et $Y^b$,
- fournir à un serveur de calcul les deux nombres $X^a$ et $Y^b$,
- recevoir en provenance du serveur la valeur $f(X^a, Y^b)$,
- extraire la racine ab$^{\text{ième}}$ de $f(X^a, Y^b)$ de manière à obtenir la valeur f(X, Y),

et une entité participant à un mécanisme impliquant la vérification par ladite entité de l'égalité d'une valeur f(X, Y) d'une application bilinéaire à une valeur donnée u, ladite entité étant **caractérisée en ce qu'**elle est programmée pour mettre en oeuvre une étape de comparaison de la valeur de $f(X^a, Y^b)^p$ au nombre $u^q$, les nombres p et q vérifiant l'égalité abp=q.

**5.** Support de données comportant des instructions de code de programme informatique pour l'exécution par ladite entité des étapes d'un procédé selon l'une quelconque des revendications 1 à 3.

**6.** Système selon la revendication 4 **caractérisé en ce que** le système est un téléphone portable.

**Patentansprüche**

**1.** Verfahren zur abgesicherten Delegation einer Berechnung durch eine Einheit, die an einem Mechanismus beteiligt ist, der die Berechnung eines Werts f(X,Y) einer Bilinearanwendung durch die Einheit impliziert, **dadurch gekennzeichnet, dass** das Verfahren die folgenden Schritte umfasst, darin bestehend:

für die Einheit:

- zwei geheime Parameter a und b auszuwählen,
- die Zahlen $X^a$ und $Y^b$ zu berechnen,
- an einen Berechnungsserver die zwei Zahlen $X^a$ und $Y^b$ zu liefern,

für den Berechnungsserver:

- die Berechnung von $f(X^a, Y^b)$ durchzuführen,
- an die Einheit den Wert von $f(X^a, Y^b)$ zu liefern,

und für die Einheit:

- die $ab^{te}$ Wurzel von $f(X^a,Y^b)$ zu ziehen, um den Wert $f(X,Y)$ zu erhalten, wobei das Verfahren eine Überprüfung durch eine Einheit umfasst, die an einem Mechanismus beteiligt ist, der die Überprüfung durch die Einheit der Gleichheit eines Werts $f(X,Y)$ einer Bilinearanwendung mit einem gegebenen Wert u impliziert, **dadurch gekennzeichnet, dass** es darin besteht:

- den Wert von $f(X^a,Y^b)^p$ mit der Zahl $u^q$ zu vergleichen, wobei die Zahlen p und q die Gleichheit $abp = q$ überprüfen.

2. Überprüfungsverfahren nach Anspruch 1, bei dem der gegebene Wert ein Wert $f(Z,T)$ einer Bilinearanwendung ist, wobei das Verfahren ferner die folgenden Schritte umfasst, darin bestehend:

für die Einheit:

- auch zwei geheime Parameter c und d auszuwählen,
- die Zahlen $Z^c$ und $T^d$ zu berechnen,
- an den Berechnungsserver die zwei Zahlen $Z^c$ und $T^d$ zu liefern,

für den Berechnungsserver:

- die Berechnung von $f(Z^c,T^d)$ durchzuführen,
- an die Einheit den Wert von $f(Z^c,T^d)$ zu liefern,

und für die Einheit:

- die Werte von $[f(X^a,Y^b)]^p$ und $[f(Z^c,T^d)]^q$ zu vergleichen, wobei die Zahlen p und q die Gleichheit $abp = cdq$ überprüfen.

3. Verfahren nach einem der Ansprüche 1 bis 3, **dadurch gekennzeichnet, dass** höchstens einer der geheimen Parameter gleich 1 ist.

4. System, umfassend eine Einheit, die an einem Mechanismus beteiligt ist, der die Berechnung eines Werts $f(X,Y)$ einer Bilinearanwendung durch die Einheit impliziert, **dadurch gekennzeichnet, dass** es programmiert ist, um die folgenden Verfahrensschritte einzusetzen, darin bestehend:

- zwei geheime Parameter a und b auszuwählen,
- die Zahlen $X^a$ und $Y^b$ zu berechnen,
- an einen Berechnungsserver die zwei Zahlen $X^a$ und $Y^b$ zu liefern,
- von dem Server den Wert $f(X^a,Y^b)$ zu erhalten,
- die $ab^{te}$ Wurzel von $f(X^a,Y^b)$ zu ziehen, um den Wert $f(X,Y)$ zu erhalten,

und eine Einheit, die an einem Mechanismus beteiligt ist, der die Überprüfung durch die Einheit der Gleichheit eines Werts $f(X,Y)$ einer Bilinearanwendung mit einem gegebenen Wert u impliziert, **dadurch gekennzeichnet, dass** es programmiert ist, um einen Schritt des Vergleichs des Werts von $f(X^a,Y^b)^p$ mit der Zahl $u^q$ einzusetzen, wobei die Zahlen p und q die Gleichheit $abp = q$ überprüfen.

5. Datenträger, umfassend Computerprogrammcodeanweisungen für die Ausführung der Schritte eines Verfahrens nach einem der Ansprüche 1 bis 3 durch die Einheit.

6. System nach Anspruch 4, **dadurch gekennzeichnet, dass** das System ein Mobiltelefon ist.

**Claims**

1. Method of secured delegation of calculation by an entity participating in a mechanism involving the calculation by said entity of a value $f(X,Y)$ of a bilinear map, **characterized in that** said method comprises the steps consisting in:

for said entity,

- choosing two secret parameters a and b,

- calculating the numbers $X^a$ and $Y^b$,
- providing the two numbers $X^a$ and $Y^b$ to a calculation server,

for said calculation server,

- performing the calculation of $f(X^a,Y^b)$,
- providing the value of $f(X^a,Y^b)$ to said entity, and, for said entity,
- extracting the $ab^{th}$ root of $f(X^a,Y^b)$ in such a way as to obtain the value $f(X,Y)$, said method comprising a verification by an entity participating in a mechanism involving the verification by said entity of the equality of a value $f(X,Y)$ of a bilinear map with a given value u, **characterized in that** it consists in:
- comparing the value of $f(X^a,Y^b)^p$ with the number $u^q$, the numbers p and q satisfying the equality abp=q.

2. Method of verification according to Claim 1, in which the given value is a value $f(Z,T)$ of a bilinear map, the method furthermore comprising the steps consisting in:

for said entity,

- also choosing two secret parameters c and d,
- calculating the numbers $Z^c$ and $T^d$,
- providing the two numbers $Z^c$ and $T^d$ to the calculation server,

for said calculation server,

- performing the calculation of $f(Z^c,T^d)$,
- providing the value of $f(Z^c,T^d)$ to said entity, and, for said entity,
- comparing the values of $[f(X^a,Y^b)]^p$ and $[f(Z^c,T^d)]^q$, the numbers p and q satisfying the equality abp=cdq.

3. Method according to any of Claims 1 to 3, **characterized in that** at most one of the secret parameters is equal to 1.

4. System comprising an entity participating in a mechanism involving the calculation by said entity of a value $f(X,Y)$ of a bilinear map, **characterized in that** it is programmed to implement the following method steps:

- choose two secret parameters a and b,
- calculate the numbers $X^a$ and $Y^b$,
- provide the two numbers $X^a$ and $Y^b$ to a calculation server,
- receive the value $f(X^a,Y^b)$ from the server,
- extract the $ab^{th}$ root of $f(X^a,Y^b)$ in such a way as to obtain the value $f(X,Y)$,

and an entity participating in a mechanism involving the verification by said entity of the equality of a value $f(X,Y)$ of a bilinear map with a given value u, said entity being **characterized in that** it is programmed to implement a step of comparing the value of $f(X^a,Y^b)^p$ with the number $u^q$, the numbers p and q satisfying the equality abp=q.

5. Data medium comprising computer program code instructions for the execution by said entity of the steps of a method according to any one of Claims 1 to 3.

6. System according to Claim 4, **characterized in that** the system is a mobile telephone.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003182554 A

- US 6779111 B

**Littérature non-brevet citée dans la description**

- **R. DUTTA.** Pairing-Based Cryptographie Protocols. IACR